(19) Europäisches Patentamt / European Patent Office / Office européen des brevets

(11) **EP 4 502 894 A1**

(12) # EUROPEAN PATENT APPLICATION

(43) Date of publication:
**05.02.2025 Bulletin 2025/06**

(21) Application number: 23188772.0

(22) Date of filing: **31.07.2023**

(51) International Patent Classification (IPC):
**G06Q 10/0635** (2023.01)   **G06N 5/022** (2023.01)
**G06Q 10/087** (2023.01)

(52) Cooperative Patent Classification (CPC):
**G06Q 10/0635; G06N 5/022; G06Q 10/087**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Aktiengesellschaft**
**80333 München (DE)**

(72) Inventors:
• **Berbalk, Martin**
  **86179 Augsburg (DE)**
• **Beyer, Dagmar**
  **80339 München (DE)**

• **Buchner, Maximilian**
  **85635 Höhenkirchen-Siegertsbrunn (DE)**
• **Hildebrandt, Marcel**
  **80634 München (DE)**
• **Inzko, Daniela**
  **80636 München (DE)**
• **Liu, Yushan**
  **81737 München (DE)**
• **Michel, Leah**
  **82515 Wolfratshausen (DE)**
• **Weigel, Emanuel**
  **76870 Kandel (DE)**
• **Wernert, Roger**
  **6315 Oberägeri (CH)**

(74) Representative: **Siemens Patent Attorneys**
**Postfach 22 16 34**
**80506 München (DE)**

(54) **AUTOMATICALLY IDENTIFYING CRITICAL OBJECTS SUPPLIED TO AN INDUSTRIAL PLANT**

(57) Assistance apparatus for automatically identifying critical suppliers of a supplier network providing material for operating an industrial plant, comprising
- a data interface module (11) configured to receive a knowledge graph (20) comprising basic information (fnodeattribute) on the supplier network,
- a graph analytics module (12) configured to determine at least one importance information (fcentrality) of nodes of the knowledge graph,

- a graph neural network processing module (13) configured to receive the basic information (fnodeatt) and the importance information (fcent) as input, and
to output a risk score (25) for all suppliers by processing the input, and
- an output interface module (14) configured to present critical suppliers having the risk score higher than a predefined threshold to a user.

FIG 3

## Description

### Field of the Invention

The present invention relates to an assistance apparatus for automatically identifying critical objects for operating an industrial plant. The invention further refers to a corresponding computer-implemented method and a computer program product.

### Background

Shortage on material in a production plant for manufacturing products, e.g., material required to manufacture a product or spare parts of machines in the production line of the product lead to delay or even downtime of the production line. Shortage on material can be caused by delivery problems of suppliers. The shortage of material can additionally be influenced by global crises like Covid, natural disasters, political and regulatory developments. Thus, increasing transparency of supply chains is required to deduce delay and/or downtime of the production line. Existing supply chain management (SCM) tools provide good transparency of 1st-tier suppliers. However, only limited structured knowledge is available of deeper tiers of supplier, i.e., tier-n where n>1, supply chains and E2E-usage over whole supply chains.

A lot of effort is put into monitoring supply chains to ensure the operability of production plants. Nevertheless, significant blind spots in the supply chain remain unidentified because many of today's most pressing supply shortages happen in these deeper supply-chain tiers.

Thus, there is a need to identify whether and where there is a "critical path" in supply chains, i.e., constellations in the supply chains that lack the resistance to withstand interruptive events, based on existing data and which could lead to a material shortage and delay or downtime of the production line.

For example, a path can be critical, if many suppliers are located in the same country/region, multiple tier-1 suppliers buy from the same sub-supplier, all suppliers are high risk, etc. Based on identified critical paths, strategic decisions and mitigation measures are derived to prevent any shortage of material and subsequent delay or downtime of the production line.

As the number of suppliers and sub-suppliers is high and the dependencies between the different suppliers, the location of the suppliers and the supplied materials, and the like is very complex, it is not possible to consider it mentally or without technical support. Currently experts decide based on their experience and manual review of the supplier data whether there are risks in the supply chain - or are informed by a tier-1 supplier that there are already existing problems in their supply chain consisting of supplier of tier-2 and higher.

Data and data-driven machine learning models play an increasingly important role in the modern world. More and more often data-driven assistance apparatuses being integrated into various engineering tools with the goal of assisting supply chain managers in performing various actions, providing insights, and reducing supply chain risks.

Thus, there is a need to identify whether and where there is a "critical path" in supply chains, i.e., constellations in the supply chains that lack the resistance to withstand interruptive events, based on existing data and which could lead to a material shortage and delay or downtime of the production line. A further object is to provide reliable risk information on supplier and/or on supplied material to estimate a delay of the production line based on the current suppliers.

### Brief Summary of the Invention

This object is solved by the features of the independent claims. The dependent claims contain further embodiment of the invention.

A first aspect concerns an assistance apparatus for automatically identifying critical suppliers of a network of suppliers providing material for operating an industrial plant, comprising:

- a data interface module configured to receive a knowledge graph comprising basic information on the suppliers of the network of suppliers,
- a graph analytics module configured to determine at least one importance information of the nodes of the knowledge graph,
- a graph neural network processing module configured to receive the basic information on the suppliers and the importance information as input, and to output a risk score for all suppliers by processing the input, and
- an output interface module configured to present critical suppliers having the risk score higher than a predefined threshold to a user.

The assistance apparatus reduces inconsistencies involved in manual risk management that is often influenced by subjective factors and overlooked information pieces.

In an advantageous embodiment the knowledge graph consists of a multitude of triples and each triple comprising two nodes and an edge connecting the two nodes, wherein the edge indicates a type of relation between the two nodes and each node identifies one of a required material, a supplier of the material or any further information related to the material or supplier of the material.

The assistance apparatus integrates historical events and topological information of the supplier network at hand provided by a knowledge graph to yield a more reliable risk estimate.

In an advantageous embodiment the knowledge graph comprises an attribution function which assigns a feature vector to every node of the knowledge graph comprising a contextual annotation of the node and representing the basic information.

The assistance apparatus integrates context information of the suppliers to yield a more reliable risk estimate.

In an advantageous embodiment the node corresponding to one of the suppliers which fails to comply with a supplier agreement is associated with a warning tag.

This warning tag is used as label in a semi-supervised node classification setting and indicates whether the supplier comes with warning tag. This enables to incorporate additional information, e.g., contractual information into the risk evaluation.

In an advantageous embodiment the graph analytics module is configured to the graph analytics module is configured to determine the im-portance information based on a subgraph of the knowledge graph, wherein the importance information comprises at least one centrality score indicating a magnitude of dependence of the nodes contained in the subgraph from one specific node of the subgraph.

The subgraph comprises for instance the nodes related to a specific supplier. Nodes of the subgraph with a high importance information, i.e., having a central position in a supplier network may constitute a bottleneck and therefore constitute a critical path.

Advantageously, a high value of the centrality score indicates a high risk for the material or supplier of the material.

In an advantageous embodiment, the graph neural network processing module is configured to comprise a trained graph neural network function which is configured to output a node embedding for every node of the knowledge graph, wherein the node embedding is a numerical vector that condenses initial features of the node and topological information from the knowledge graph's neighbourhood of the node.

Every node in the knowledge graph is mapped to the numerical vector, i.e., the node embedding similar to the nodes of the trained graph neural network function.

In an advantageous embodiment the graph neural network processing module comprises a classifier network function that inputs the node embedding of a node as input and outputs the risk score associated with that node.

The graph neural network can be a graph neural network of any kind. The classification network provides a post-processing which enables a subsequent ranking of the output.

In an advantageous embodiment the graph neural network function is configured to receive as input the basic information and at least one centrality score of every node of a subgraph S comprising all nodes representing suppliers of a selected supply chain and the feature vectors and centrality scores of all neighbouring nodes in a receptive field of the knowledge graph around the supply chain and outputs a context-aware node embedding.

Taking into account the basic information, i.e., feature vector including annotations where available, and centrality scores of the considered supply chain enables the graph neural network to relate information on nodes of suppliers of many tiers. This provides otherwise hidden dependencies.

In an advantageous embodiment the trained graph neural network function is trained by training data comprising a knowledge graph of a known supplier network and labels associated with the nodes of the knowledge graph indicating the supplier and optimizing the function to fit the observed risk score of the known supplier network.

The resulting trained graph neural network reflects historical supply chains and the experienced risk.

In an advantageous embodiment the risk score for the required supplier is transferred from the output interface to a risk evaluation unit which calculates a likelihood for a delay of material required for the production line based on the risk score of the current suppliers.

The calculated delay of production provides a concrete impact of the supply chain onto the operation of the production line in the industrial plant.

A second aspect concerns a computer-implemented method for automatically identifying critical suppliers of a supplier network providing material to an industrial plant comprising:

- receiving a knowledge graph comprising basic information on the supplier network (the required material) by a data interface module,
- determining at least one importance information of the nodes of the knowledge graph by a graph analytics module,
- receiving the basic information and the im-portance information as input, and outputting a risk score for all suppliers (material) by processing the input by a graph neural network processing module, and

- presenting critical suppliers having the risk score higher than a predefined threshold to a user by an output interface.

A third aspect concerns a computer program product comprising a non-transitory computer readable medium that stores computer executable code that when executed on a processor performs the method as described above.

The computer program product can be stored on a computer-readable storage medium comprising instructions which, when executed by a computer, cause the computer to carry out the steps as described before.

A fourth aspect concerns a computer program comprising program instructions that cause, when the program is executed by a computer, the computer to carry out the above-described method.

The invention will be explained in more detail by reference to accompanying figures. Similar objects will be marked by the same reference signs. The figures are provided to illustrate example embodiments described herein and are not intended to limit the scope of the disclosure.

Figure 1    schematically illustrates an embodiment of the inventive assistance apparatus.

Figure 2    schematically illustrates an embodiment of the inventive computer-implemented method as a flow diagram.

Figure 3    schematically illustrates the functional units implemented in the modules of the inventive assistance apparatus.

It is noted that in the following detailed description of embodiments, the accompanying drawings are only schematic, and the illustrated elements are not necessarily shown to scale. Rather, the drawings are intended to illustrate functions and the co-operation of functions or components. Here, it is to be understood that any connection or coupling of functional blocks, devices, components or other physical or functional elements could also be implemented by an indirect connection or coupling, e.g., via one or more intermediate elements. A connection or a coupling of elements or components or nodes can for example be implemented by a wire-based, a wireless connection and/or a combination of a wire-based and a wireless connection.

Functional units or modules can be implemented by dedicated hardware, e.g., processor, firmware or by software, and/or by a combination of dedicated hardware and firmware and software. It is further noted that each module and functional unit described for an apparatus can perform a functional step of the related method and vice versa.

The numeration of the steps in the methods are meant to ease their description. They do not necessarily imply a certain ordering of the steps. In particular, several steps may be performed concurrently.

**Technical Problem**

A lot of effort is put into monitoring supply chains to ensure the operability of production plants. Nevertheless, significant blind spots in the supply chain remain unidentified because many of today's most pressing supply shortages happen in these deeper supply-chain tiers.

Thus, there is a need to identify whether and where there is a "critical path" in supply chains, i.e., constellations in the supply chains that lack the resistance to withstand interruptive events, and which could lead to a material shortage and delay or downtime of the production line.

For example, a path can be critical, if many suppliers are located in the same country/region, multiple tier-1 suppliers buy from the same sub-supplier, all suppliers are high risk, etc. Based on identified critical paths, mitigation measures can be derived to prevent any shortage of material and subsequent delay or downtime of the production line. The complexity of the interdependence of the supplier to various sub-suppliers on different levels and the dependency of material availability due to geographical location, environmental conditions and furthermore makes it impossible to consider all these aspects mentally.

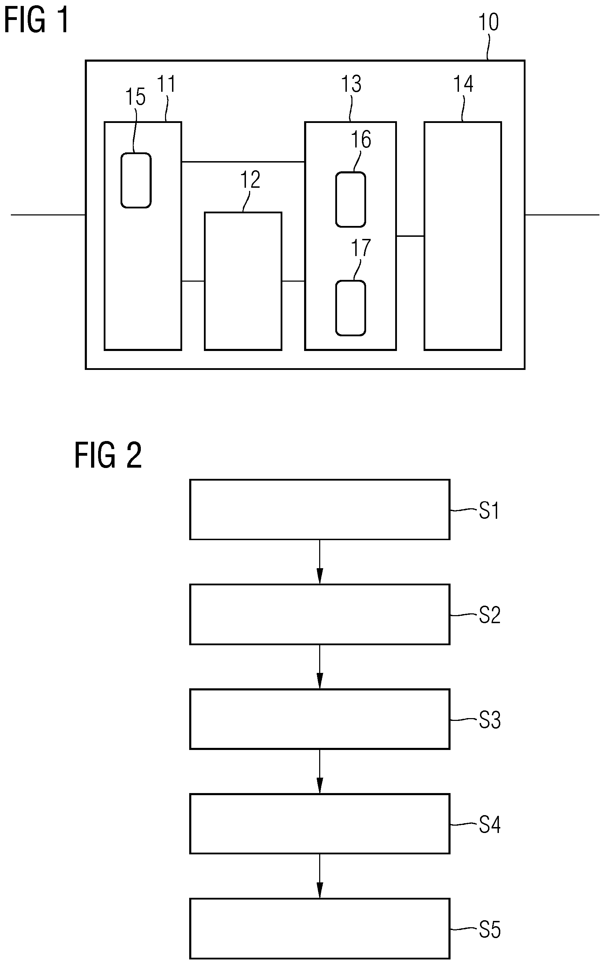

Fig. 1 shows an embodiment of an assistance system 10 which is configured to automatically identifying critical suppliers of a supplier network providing material for operating an industrial plant.

The assistance system 10 comprises a data interface module 11, a graph analytics module 12, a graph neural network processing module 13 and an output interface module 14.

The data interface module 11 configured to receive a knowledge graph comprising basic information on the supplier network. The knowledge graph is a machine readable, graph-structured data model used to store interlinked descriptions of nodes while also encoding the semantics underlying the used terminology. The received knowledge graph consists of a multitude of triples and each triple comprising two nodes and an edge connecting the two nodes, wherein the edge indicates a type of relation between the two nodes and each node identifies one of a material, a supplier of the material or any further information related to the material or the supplier of the material. As an example, nodes identify the chemical ingredients or elements of a material required in the industrial plant, the geographical location of the supplier and furthermore.

The data interface module 11 comprises an attribution function 15 which assigns a feature vector to every node of the knowledge graph comprising a contextual annotation of the node and representing the basic information. The attribution function further associates a warning tag to nodes which represent suppliers which fail to comply with a supplier agreement. The data interface module 11 is connected to the graph neural network processing module 13 and transfers the basis information to the graph neural network processing module 13. The data interface module 11 is connected to the graph analytics module 12 and provides the knowledge graph as a whole or at least subgraphs of the knowledge graph to the graph analytics module 12.

The graph analytics module 12 is configured to determine at least one importance information of the nodes of the knowledge graph. The importance information is based on a subgraph of the knowledge graph. The importance information comprises at least one centrality score indicating a magnitude of dependence of the nodes contained in the subgraph from one specific node of the subgraph. A high value of the centrality score of the specific node indicates a high risk for material or supplier of the material which is represented by the specific node. The graph analytics module 12 is connected to the graph neural network processing module 13 and transfers the importance information determined importance information to the graph neural network processing module 13.

The graph neural network processing module 13 is configured to receive the basic information from the data interface module 11 and the importance information from the graph analytics module 12. The graph neural network processing module 13 processes these information and outputs a risk score for all suppliers. The graph neural network processing module 13 is configured to comprise a trained neural network function 16 which is configured to output a node embedding for every node of the knowledge graph. The node embedding is a numerical vector that condenses initial features of the node and topological information of the graph neighbourhood the node. The graph neural network processing module 13 comprises a classifier network function 17 that inputs the node embedding of a node as input and outputs the risk score associated with that node.

In more detail, the trained graph neural network function (16) is configured to receive as input the basic information and at least one centrality score of every node of a subgraph comprising all nodes representing suppliers of a selected supply chain and the feature vectors and centrality scores of all neighbouring nodes in a receptive field of the knowledge graph around the supply chain and outputs a context-aware node embedding.

The trained graph neural network function 16 is trained by training data comprising a knowledge graph of a known supplier network and labels associated with the nodes of the knowledge graph indicating the supplier and optimizing the function to fit the observed risk score of the known supplier network.

The output interface module is configured to present critical suppliers having the risk score higher than a predefined threshold to a user. Optionally, the risk score for the required supplier is transferred from the output interface module to a risk evaluation unit which calculates the delay of the production line based on the risk score of the current suppliers.

Fig. 2 shows the computer-implemented method executed by the assistance apparatus 10. As a first step S1 a knowledge graph is received by the data interface module comprising basic information on a supplier network and/or required material.

At least one importance information of nodes of the knowledge graph are determined by a graph analytics module, see S2. In step S3 the basic information and the importance information is received as input by a graph neural network processing module 13. A risk score is output, see S4, for all suppliers by processing the input by a graph neural network processing module. Critical suppliers having the risk score higher than a predefined threshold is presented to a user by an output interface module, see step S5.

The method comprises all further steps which will be performed by the assistance apparatus as described above.

A further aspect of the invention concerns a computer program product comprising a non-transitory computer readable medium that stores computer executable code that when executed on a processor performs the method illustrated in Fig. 2 and described above.

A further aspect of the invention concerns a computer program comprising program instructions that cause, when the program is executed by a computer, the computer to carry out a method illustrated in Fig. 2 and described above. Optionally the assistance apparatus and the computer-implemented method can be modified to identify critical material instead of critical suppliers. The information on critical materials may support in engineering and development to find, e.g., replacement materials substituting the critical materials in an early stage.

The assistance apparatus and/or the method respectively can be implemented as stand-alone device or can be integrated into an engineering tool that can be employed for both pro- and reactive supply chain risk management helping to detect risk exposures of a given input supply chain.

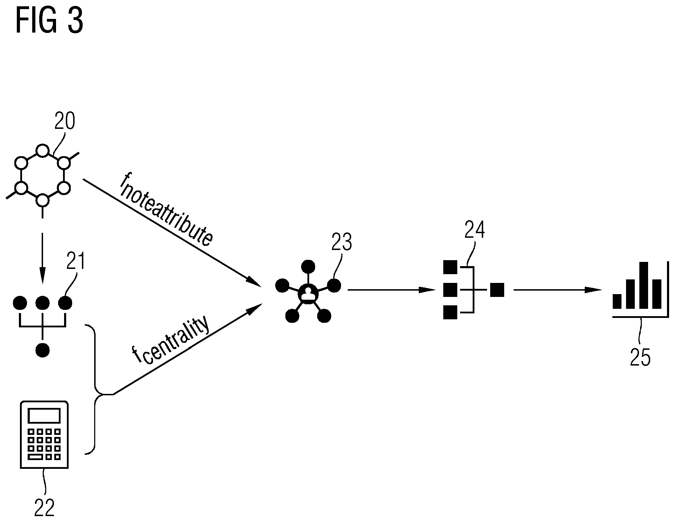

Fig. 3 illustrates major building blocks of the assistance apparatus and method in terms of data structures to be processed and functionalities processing the data structures. The modules of the assistance apparatus are configured to handle an/or implement the building blocks.

Main building blocks with respect to data structures are a knowledge graph 20 and subgraphs 21 of the knowledge graph 20 as well as the risk score 25 output by the graph neural network processing module 13. Main functionalities with respect to data processing are a graph analytics module 22, the graph neural network 23 and classifier network 24 which are implemented in the trained graph neural network function 16 and classifier network function 17 in the assistance apparatus 10. The graph analytics module 22 dynamically computes a set of knowledge graph statistics. The graph neural network 23 and classifier network 24 are trained machine learning models that operate on the knowledge graph 20.

The knowledge graph 20 is given by a directed multigraph represented as a list of triples $KG \subset E \times R \times E$, where KG denotes the knowledge graph, E denotes a set of nodes and R the set of edge types (or relations). The expressions entity, vertex and node are used synonymously throughout this document. Among others, the nodes correspond to suppliers, branches, industries, countries, and furthermore. The edge types specify how a pair of nodes is connected to each other. For example, the triple $(CompanyA, producesIn, Germany) \subset KG$ contains the information that the company A has production sites in Germany.

In addition to the topological information given by the entirety of edges, there may also exists a contextual annotation of both the edge and nodes. Formally, this is given by a function

$$f_{node\ attribute} : E \to \mathbb{R}^n,$$

which assigns to every node an n-dimensional feature vector.

In addition to the node attributes, some entities corresponding to suppliers are associated with warning tags that indicate failure to comply with the supplier agreement. These tags are used as labels in a semi-supervised node classification setting and indicate with $y_i \in \{0,1\}$ whether the supplier $e\_i \in E$ comes with warning tag $y_i = 1$.

The graph analytics module 22 dynamically computes various measures of node centrality such as degree centrality, betweenness centrality, and eigenvector centrality conditioned on a given subgraph 21. Degree centrality is defined as the number of links incident upon a node, i.e., the number of edges a node has. Betweenness centrality is a measure of centrality in a graph based on shortest paths. Eigenvector centrality is a measure of the influence of a node in a network. A high eigenvector score means that a node is connected to many nodes who themselves have high scores.

An example for the subgraph 21 is based on the considered supplier network, i.e., nodes of the knowledge graph 20 representing suppliers. This supplier network subgraph is important because nodes with a central position in the supplier network may constitute a bottleneck in the supply chain and therefore constitute a critical path. For example, if multiple tier-1 suppliers are all connected via a "supplies_to"-relation to a particular tier-2 supplier, this is likely to constitute a critical path because the failure of the tier-2 supplier may have a high impact on the supply chain.

Similarly, if a multitude of the suppliers produce in the same country, there might be an increased supply chain risk due to the exposure to a common confounder, i.e., an attribute that many nodes have in common, such as natural disasters, political events, or disturbances in the transportation system. These topological bottlenecks in the supplier network may be detected via high centrality scores, and when placed in context with the topology and other node attributes, is an important feature when it comes to detecting supply chain risks.

To ease the notation, given the subgraph $S \subset KG$, we denote with $f_{centrality|S}(e)$ the mapping that assigns to every node in S a set of c distinct centrality measures.

Generally, graph neural networks (GNNs) are trainable mappings that produce vector space embeddings of the nodes in a graph. Concretely, every node in the graph is mapped to a numerical vector, commonly referred to as embedding, that condenses both the node's initial features as well as topological information from the graph neighbourhood. The graph neural network 23 can be any kind of graph neural network that can operate on KGs, but preferably a specialized GNN architectures such as Relational data with Graph Convolutional networks RGCN as described in Schlichtkrull, Michael, et al. "Modeling relational data with graph convolutional networks." European semantic web conference. Springer, Cham, 2018 or a Composition-based multi-relational Graph Convolutional Networks as described in Vashishth, Shikhar, et al. "Composition-based multi-relational graph convolutional networks." arXiv preprint arXiv:1911.03082 (2019).

Let $f_{GNN} : E \to \mathbb{R}^d$ denote the trained graph neural network 23. Given a subgraph $\kappa \subset KG$, $f_{GNN}$ takes the feature vector $f_{node\ attribute}(e)$, i.e., the basic information, and the centrality measures $f_{centrality|S}(e)$, i.e., the importance information, of a given center entity $e \in S$ along with all the feature vectors and the centrality scores of all neighboring nodes in a receptive field and produces a context-aware embedding $h_e \in \mathbb{R}^d$, where d denotes the embedding size. The size the receptive field corresponds to the number of layers in graph neural network $f_{GNN}$.

Moreover, $f_{GNN}$ is composed with the classifier network $g_{MLP} : \mathbb{R}^d \to (0,1)$. Thereby, the classifier network $g_{MLP}$ takes the node embedding of a supplier as input and outputs the risk score 25 associated with that supplier.

During deployment, the workflow of the proposed method operates as follows:

1. Given a supply chain at hand, all suppliers $S = \{e_1, e_2, ...\} \subset E$ are retrieved that are contained in this supply chain.

2. To prepare the input for $f_{GNN}$, the receptive field around $S$ is assembled. Concretely, for every $e_i \in S$, the $n$-order neighbourhood dented by $N_n(e_i)$ is assembled, where $n$ indicated the number of layers in the graph neural network $f_{GNN}$.

3. The graph analytics module computes all centrality measures of $N_n(S)$.

4. Using the centrality measure and the node features of all nodes in $N_n(S)$, we compute risk scores for all suppliers $e_i \in S$ via a forward pass through the network $g_{MLP} \circ f_{GNN}$, where $\circ$ denotes the composition operator.

5. Display the suppliers with a large risk score (e.g., the scores above a threshold) to the user.

The graph neural network 23 composed with the classification network 24, i.e., $g_{MLP} \circ f_{GNN}$, is trained and validated as follows:
Training data $T$ consists of a knowledge graph $KG$ along with labels $y_i$ associated with supplier entities $e_i$, that means

$$T = \{(e_1 y_1), (e_2, y_2), ..., (e_N, y_n)\}.$$

Labels associate to suppliers. E.g., the warning label is a label associated to the supplier. Training data are preferably historical data of suppliers with labels with value of either (0 or 1), or further values depending on the differentiation of states the supplier can attend, e.g., label values in the range of (0 to 1).
The goal is to fit the trainable parameters of $g_{MLP} \circ f_{GNN}$ so that the observed risk scores fit as good as possible. The training data can be generated by any classification loss, for example the cross-entropy loss given by

$$L = -\sum_{(e_i, y_i) \in T} y_i * \log\big(g_{MLP} \circ f_{GNN}(e_i)\big) + (1 - y_i) * \log\big(1 - g_{MLP} \circ f_{GNN}(e_i)\big).$$

The trainable parameters can be tuned via any variant of stochastic gradient descent.
The assistance apparatus and method enable a completion/extrapolation of risk data as baseline for Artificial Intelligence/ machine learning driven risk predictions.
They enable systematic risk management that integrates data from multiple internal and external sources. Thereby, the risk of inconsistencies involved in manual risk management is reduced that is often influenced by subjective factors and overlooked information pieces. In contrast to other risk measures, the described assistance apparatus and method integrates historical events, context information, and topological information of the supplier network at hand to yield a more reliable risk estimate.
It is to be understood that the above description of examples is intended to be illustrative and that the illustrated components are susceptible to various modifications. For example, the illustrated concepts could be applied for different technical systems and especially for different sub-types of the respective technical system with only minor adaptions.

## Claims

1. Assistance apparatus for automatically identifying critical suppliers of a supplier network providing material for operating an industrial plant, comprising

   - a data interface module (11) configured to receive a knowledge graph (20) comprising basic information (fnodeattribute) on the supplier network,
   - a graph analytics module (12) configured to determine at least one importance information (fcentrality) of nodes of the knowledge graph,
   - a graph neural network processing module (13) configured to receive the basic information (fnodeatt) and the importance information (fcent) as input, and
   to output a risk score (25) for all suppliers by processing the input, and
   - an output interface module (14) configured to present critical suppliers having the risk score higher than a predefined threshold to a user.

2. Assistance apparatus according to claim 1, wherein the knowledge graph (20) consists of a multitude of triples and each triple comprising two nodes and an edge connecting the two nodes, wherein the edge indicates a type of relation between the two nodes and each node identifies one of a material, a supplier of the material or any further information related to the material or the supplier of the material.

3. Assistance apparatus according any of the preceding claims, wherein the data interface module (11) comprises an attribution function (15) which assigns a feature vector to every node of the knowledge graph (20) comprising a contextual annotation of the node and representing the basic information (fnodeattribute).

4. Assistance apparatus according any of claims 2-3, wherein the node corresponding to one of the suppliers which fails to comply with a supplier agreement is associated with a warning tag.

5. Assistance apparatus according to any of the preceding claims, wherein the graph analytics module (12) is configured to determine the importance information (fcentrality) based on a subgraph of the knowledge graph (20), wherein the importance information (fcentrality) comprises at least one centrality score indicating a magnitude of dependence of the nodes contained in the subgraph from one specific node of the subgraph.

6. Assistance apparatus according to claim 5, wherein the subgraph comprises nodes representing suppliers, and wherein a high value of the centrality score indicates a high risk for the material or supplier of the material.

7. Assistance apparatus according to any of the preceding claims, wherein the graph neural network processing module (13) is configured to comprise a trained neural network function (16) which is configured to output a node embedding for every node of the knowledge graph (20), wherein the node embedding is a numerical vector that condenses initial features of the node and topological information of the graph neighbourhood the node.

8. Assistance apparatus according to claim 7, wherein the graph neural network processing module (13) comprises a classifier network function (17) that inputs the node embedding of a node as input and outputs the risk score associated with that node.

9. Assistance apparatus according to claim 3-8, wherein the trained graph neural network function (16) is configured to receive as input the basic information and at least one centrality score of every node of a subgraph S comprising all nodes representing suppliers of a selected supply chain and the feature vectors and centrality scores of all neighbouring nodes in a receptive field of the knowledge graph around the supply chain and outputs a context-aware node embedding.

10. Assistance apparatus according to any of the preceding claims, wherein the trained graph neural network function (16) is trained by training data comprising a knowledge graph of a known supplier network and labels associated with the nodes of the knowledge graph indicating the supplier and optimizing the function to fit the observed risk score of the known supplier network.

11. Assistance apparatus according to any of the preceding claims, wherein the risk score for the required supplier is transferred from the output interface to a risk evaluation unit which calculates a likelihood for a delay of material required for the production line based on the risk score of the current suppliers.

12. Computer-implemented method for automatically identifying critical suppliers of a supplier network providing material to an industrial plant comprising:

> - receiving (S1) a knowledge graph (fnodeattribute) comprising basic information on the supplier network by a data interface module (11),
> - determining (S2) at least one importance information (fcentrality) of nodes of the knowledge graph by a graph analytics module (12),
> - receiving (S3) the basic information (fnodeattribute) and the importance information (fcentrality) as input, and outputting (S4) a risk score for all suppliers by processing the input by a graph neural network processing module (13), and
> - presenting (S5) critical suppliers having the risk score higher than a predefined threshold to a user by an output interface module (15).

13. A computer program product comprising a non-transitory computer readable medium that stores computer executable code that when executed on a processor performs the method as claimed in claim 11.

14. Computer program comprising program instructions that cause, when the program is executed by a computer, the computer to carry out a method according to claim 11.

FIG 1

FIG 2

FIG 3

$f_{noteattribute}$

$f_{centrality}$

Europäisches
Patentamt

European
Patent Office

Office européen
des brevets

# EUROPEAN SEARCH REPORT

**Application Number**

EP 23 18 8772

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUSHAN LIU ET AL: "A Knowledge Graph Perspective on Supply Chain Resilience", ARXIV.ORG, CORNELL UNIVERSITY LIBRARY, 201 OLIN LIBRARY CORNELL UNIVERSITY ITHACA, NY 14853, 15 May 2023 (2023-05-15), XP091508768, * abstract * * sections 1, 3, 4, 5, 6 * | 1-14 | INV. G06Q10/0635 G06N5/022 G06Q10/087 |
| X | US 2018/197128 A1 (CARSTENS LUCAS [GB] ET AL) 12 July 2018 (2018-07-12) * abstract * * paragraphs [0003] – [0007], [0010], [0014] – [0021], [0025] – [0030], [0040], [0042] – [0044], [0055] – [0082] * | 1-14 | |

**TECHNICAL FIELDS SEARCHED (IPC)**

G06Q
G06N

The present search report has been drawn up for all claims

| Place of search | Date of completion of the search | Examiner |
|---|---|---|
| Munich | 17 January 2024 | Moltenbrey, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

# EP 4 502 894 A1

## ANNEX TO THE EUROPEAN SEARCH REPORT
## ON EUROPEAN PATENT APPLICATION NO.

EP 23 18 8772

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2024

| Patent document cited in search report | Publication date | Patent family member(s) | Publication date |
|---|---|---|---|
| US 2018197128 A1 | 12-07-2018 | NONE | |

For more details about this annex : see Official Journal of the European Patent Office, No. 12/82

EPO FORM P0459

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Modeling relational data with graph convolutional networks.. **SCHLICHTKRULL** ; **MICHAEL et al.** European semantic web conference. Springer, 2018

- **VASHISHTH** ; **SHIKHAR et al.** Composition-based multi-relational graph convolutional networks.. *arXiv*, 2019